# EUROPEAN PATENT APPLICATION

(11) **EP 2 082 931 A1**
(43) Date of publication of application: **29.07.2009**
(21) Application number: 08100831.0
(22) Date of filing: 23.01.2008
(51) Int. Cl.: B60S 5/02, B64F 1/28, B60P 3/22, B67D 5/04

(54) **Transportable refuelling assembly**

(71) Applicant: SHELL INTERNATIONALE RESEARCH MAATSCHAPPIJ B.V., 2596 HR Den Haag (NL)
(72) Inventor: Lewis, Thomas Andrew, Hawthorn East VIC 3123 (AU); Macri, Mario, Hawthorn East VIC 3123 (AU); Volz, David George, Hawthorn East VIC 3123 (AU); Olliver, Sean David, Hawthorn East VIC 3123 (AU)
(74) Representative: Zeestraten, Albertus W. J.

(57) **Abstract**

A transportable refuelling assembly (10) including a chassis (11) upon which there is mounted a tank (14). Separated from the tank (14) by means of an air gap (39) is a first enclosure (20) that has electrical apparatus. The assembly (10) is an unmanned point of sale facility, as a user by means of an electronic card can operate the assembly (10) to dispense fuel, such as aviation fuel.

## Description

The present invention relates to transportable refuelling assemblies and more particularly but not exclusively to such assemblies employed to deliver aviation fuel.

Mobile refuelling assemblies include a chassis (in some instances provided by the motor lorry) upon which there is mounted a tank from which fuel is delivered to, (for example) an aircraft. Also mounted on the chassis are pumps and hoses which are exposed. When an aircraft is to be refuelled, an attendant extends the hose to the aircraft and then oversees the operation of a pump that delivers the fuel from the tank to the aircraft.

Aircraft may also be refuelled from a stationary installation. Again an attendant is required.

The above discussed refuelling assemblies have the disadvantage that an attendant is generally required, adding considerably to the cost of the fuel being dispensed.

A disadvantage of the above discussed mobile refuelling assemblies is that the hose reel and other equipment are exposed.

Airport infrastructure and facilities, particularly utilities such as communications and power, tend to be capital intensive, with a hazardous fixed facility being both costly and also potentially leaving liabilities during dismantling the facility. In essence, it is capital intensive to both enter and exit the site.

It is the object of the present invention to overcome or substantially ameliorate at least one of the above disadvantages.

In accordance with the present invention there is provided a transportable refuelling assembly including:
a chassis;
a tank mounted on the chassis and providing a chamber to receive fuel;
an enclosure also mounted on the chassis and spaced from the tank so as to provide an air gap therebetween;
electrical apparatus located in the enclosure to provide for the dispensing of fuel from said chamber; and
a dispenser located in the enclosure and connected to said chamber to receive fuel therefrom so that the dispenser may dispense the fuel, the dispenser also being operatively associated with the electrical apparatus in said closure to provide for the dispensing of fuel from said dispenser.

Preferably, the air gap is exposed for the flow of air therethrough.

Preferably, said chassis is elongated so as to extend between longitudinally opposite first and second ends, with said enclosure being located at said first end.

Preferably, said tank has an end wall and said enclosure has an end wall spaced from said tank end wall so as to provide said gap.

Preferably, said assembly includes a sub-chamber located in said enclosure, with said dispenser located in said sub-chamber.

Preferably, said dispenser is a hose reel and hose wound thereabout, with the hose reel being in communication with said chamber to receive fuel therefrom.

Preferably, said assembly includes a door providing access to said enclosure.

Preferably, said enclosure is a first enclosure, and said assembly includes a second enclosure, said second enclosure being located at said second end, said second enclosure including a coupling to be attached to a supply of fuel, the coupling being in communication with said chamber to provide for the flow of fuel thereto from said supply.

Preferably, said assembly includes a door providing access to said reel.

Preferably, said assembly includes a power supply to provide electric power for the operation of said electrical devices.

Preferably, said power supply is a solar panel, or wind or motor generator with a rechargeable battery pack.

Preferably, said assembly includes electronic apparatus providing for the recording of information including fuel dispensed and information regarding a purchaser of fuel dispensed.

Preferably, said chassis is longitudinally elongated and includes a pair of generally parallel co-extensively extending beams joined by transverse ties, and said tank has a longitudinal axis generally parallel to said beams.

Preferably, said air gap is generally transverse and normal to said axis.

Preferably, said assembly includes a door providing direct access to said sub-chamber from the exterior.

A preferred form of the present invention will now be described by way of example with reference to the accompanying drawings wherein:

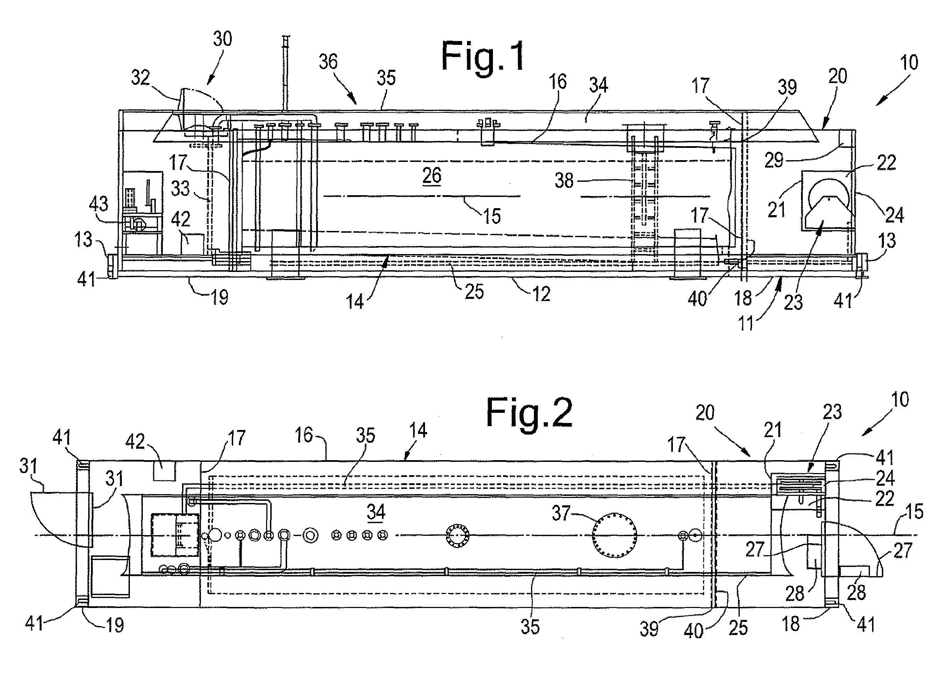

Figure 1 is a schematic side elevation of a transportable refuelling assembly to dispense aircraft fuel;
Figure 2 is a schematic top plan view of the assembly of Figure 1; and

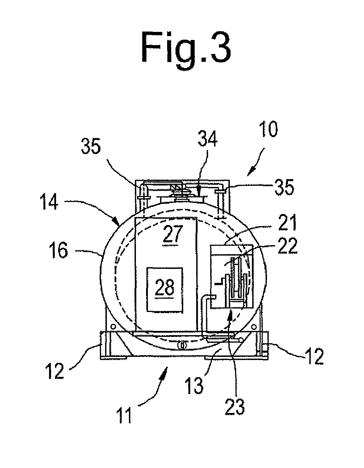

Figure 3 is a schematic end elevation of the assembly of Figures 1 and 2.

In the accompanying drawings, there is schematically depicted a transportable refuelling assembly 10 to provide for the refuelling of aircraft. The assembly 10 includes an elongated chassis 11 consisting of a pair of generally parallel co-extensive transversely spaced beams 12 joined by transverse ties 13.

Mounted on the chassis 11 is a tank 14. In this embodiment the tank 14 is of a cylindrical configuration so as to have a longitudinal axis 15. The tank 14 has a cylindrical outer longitudinal wall 16 joining circular end walls 17. The longitudinal axis 15 is parallel to the rails 12.

The chassis 11 extends between longitudinal chassis end portions 18 and 19. The end portions 18 and 19 have sockets 41 that would engage projections on a trailer used to transport the assembly 10. Mounted on the chassis portion 18 is a first enclosure 20 that is an "electrical" room and houses a power supply in the form of a generator and/or battery pack, switchboard, compressor and other electrical apparatus necessary for the dispensing of aviation fuel from the assembly 10. The compressor would provide air under pressure that would be used to operate various valves. Located in the first enclosure 20 is a further enclosure 21 providing a sub-chamber 22 that receives a reel and hose 23 via which aviation fuel is dispensed. A door 24 provides access to the hose and reel 23. The hose and reel 23 is connected by means of a pipe 25 to the chamber 26 of the tank 14 within which a supply of aviation fuel is provided. A pump 42 delivers fuel to the pipe 25 under pressure to supply the reel and hose 23. The abovementioned power supply may also be a mains power support, solar panel or wind or motor generator, that is external to the enclosure 20.

Access is provided to the interior of the enclosure 20 by means of a door 27. In this embodiment, the door 27 has an electrical apparatus or electronic assembly 28 that would, for example, include a touch screen and a card reader, the touch screen providing information in respect of fuel cost and the volume distributed and other relevant information and data. Alternative embodiments may have the electrical assembly 28 mounted on the same end of the tank but not contained within door 27, namely alternative configurations of enclosure 20 in geometry, apertures and size. In addition the electrical apparatus 28 would be operatively associated with the pump 42 connected to the pipe 25 to cause operation thereof to deliver fuel under pressure to the hose and reel 23. Preferably, the information stored and/or obtained by the apparatus 28 can be "downloaded" so that it can be remotely assessed.

Similarly, the enclosure 21 is sealed from the interior of the remainder of the enclosure 20 and is also sealingly closed by its door 24.

Mounted on the enclosure 20 is a ventilation device 29 that may include a fan to purge the interior of the enclosure 20 with fresh air. Linked to the ventilation device is gas/atmosphere monitoring equipment facilitating the same entry/exit of maintenance staff and operation of electrical equipment in hazardous areas.

Mounted on the chassis end portion 19 is a second enclosure 30, the second enclosure 30 having a door 31 and pivotally mounted hatch 32. The enclosure 30 has a coupling 43 providing for the delivery of fuel to the chamber 26. Located internally of the enclosure 30 and providing access to the hatch 32 is a ladder 33, the ladder 33 providing access to a top "walkway" 34 having collapsible safety side rails 35. The walkway 34 provides access to the usual array of ports, valves and vents 36 usually associated with a tank that provides aviation fuel. There is further provided a removable hatch 37 that provides access to the chamber 36 by means of an internal ladder 38 located below the hatch 37. The hatch 32 is operatively associated with the rails 35 so that the rails 35 are raised when the hatch 32 is opened. Preferably, the rails 35 are moved between a raised position and a lowered position by air operated rams, the rams receiving air under pressure from the previously mentioned compressor.

Located internally of the second enclosure 30 are couplings providing for the delivery of fuel to the chamber 26, as well as gauges providing an indication of the fuel level within the chamber 26. Also located in the enclosure 30 is the abovementioned pump 42.

The enclosure 20 has an end wall 40, with an air gap 39 separating the walls 17 and 40 so that the tank 14 is separated from the enclosure 20 by the air gap 39.

The enclosures 20 and 30 are formed of welded sheet metals such as aluminium.

The door 24 provides direct access to the sub-chamber 22 rather than through the enclosure 20.

The walls 17 and 40 are generally planar and transverse of the axis 15 so that the gap 39 is generally perpendicular to the axis 15.

The above described preferred embodiment has the advantage of separating the electrical apparatus contained in the first enclosure 20 from the tank 16, that is, it is separated from "hazardous zones". A further advantage of the above described preferred embodiment is that the tank and associated apparatus are mounted on a common chassis and therefore transported as a unit.

A further advantage of the above described preferred embodiment is that the purchaser of the aviation fuel may operate the assembly 10 by use of an electronic card. Accordingly, from the supplier's point of view it is "an unmanned point of sale facility".

A still further advantage of the above described embodiment is that the assembly 10 is a fully self-contained portable "facility", namely refuelling assembly, which provides a great advantage both commercially and environmentally.

The electrical apparatus 28 preferably provides flexible communications modules allowing both wireless and terrestrial/fixed based communications. This allows full access to broadband speed/type communications for data uploading and downloading such as transactional data, volumes, general information, marketing materials, web-access, software and any other required data.

Furthermore, enclosure 20, adjacent to electrical apparatus 28, may contain an Emergency Phone and Emergency Stop provision. This would allow users to safely shutdown and make people aware of an emergency with full remote monitoring of such alarms and systems.

The tank 16 has electronic tank gauging with fully independent secondary overfill systems, making filling from bulk transport safer and quicker. Using gauges and fail-safe control systems located in the enclosure 30 overcomes the need for staff to climb and "dip" the tank 16.

Preferably, in the above described assembly 10, the various couplings such as the coupling 43 and hose and reel 23 are "dry-break" connections. Accordingly, operators are not required to handle product, thereby providing a safer environment.

## Claims

1. A transportable refuelling assembly including:
a chassis;
a tank mounted on the chassis and providing a chamber to receive fuel;
an enclosure also mounted on the chassis and spaced from the tank so as to provide an air gap therebetween, said assembly preferably including a door providing access to said enclosure and/or said air gap preferably being exposed for the flow of air therethrough;
electrical apparatus located in the enclosure to provide for the dispensing of fuel from said chamber; and
a dispenser located in the enclosure and connected to said chamber to receive fuel therefrom so that the dispenser may dispense the fuel, the dispenser also being operatively associated with the electrical apparatus in said closure to provide for the dispensing of fuel from said dispenser.

2. The assembly of claim 1, wherein said chassis is elongated so as to extend between longitudinally opposite first and second ends, with said enclosure being located at said first end.

3. The assembly of claim 1 or 2, wherein said tank has an end wall and said enclosure has an end wall spaced from said tank end wall so as to provide said gap.

4. The assembly of claim 1, 2 or 3, further including a sub-chamber located in said enclosure, with said dispenser located in said sub-chamber, said assembly preferably being provided with a door providing access to said sub-chamber.

5. The assembly of any one of claims 1 to 4, wherein said dispenser is a hose reel and hose wound thereabout, with the hose reel being in communication with said chamber to receive fuel therefrom, said assembly preferably including a door providing access to said reel.

6. The assembly of any one of claims 1 to 5, wherein said enclosure is a first enclosure, and said assembly includes a second enclosure, said second enclosure being located at said second end, said second enclosure including a coupling to be attached to a supply of fuel, the coupling being in communication with said chamber to provide for the flow of fuel thereto from said supply.

7. The assembly of any one of claims 1 to 6, wherein said assembly includes a power supply to provide electric power for the operation of said electrical devices, said power supply preferably being a solar panel, or wind or motor generator with a rechargeable battery pack.

8. The assembly of any one of claims 1 to 7, wherein said assembly includes electronic apparatus providing for the recording of information including fuel dispensed and information regarding a purchaser of fuel dispensed.

9. The assembly of any one of claims 1 to 8, wherein said chassis is longitudinally elongated and includes a pair of generally parallel co-extensively extending beams joined by transverse ties, and said tank has a longitudinal axis generally parallel to said beams.

10. The assembly of claim 9, wherein said air gap is generally transverse and normal to said axis.
